# EUROPÄISCHE PATENTSCHRIFT

(11) **EP 1 373 333 B1**
(45) Veröffentlichungstag und Bekanntmachung des Hinweises auf die Patenterteilung: **02.02.2005**
(21) Anmeldenummer: 02724188.4
(22) Anmeldetag: 28.02.2002
(51) Int. Cl.: C08F 10/00, C08F 4/00

(54) **VERFAHREN ZUR DOSIERUNG VON KATALYSATOREN**
METHOD FOR FEEDING CATALYSTS
PROCEDE DE DOSAGE DE CATALYSEURS

(30) Priorität: 05.03.2001 DE 10110551
(43) Veröffentlichungstag der Anmeldung: 02.01.2004
(73) Patentinhaber: Basell Polyolefine GmbH, 50389 Wesseling (DE)
(72) Erfinder: DOLLE, Volker, 64625 Bensheim (DE); CHICOTE CARRION, Eduardo, E-433 Tarragona (ES)
(74) Vertreter: Seelert, Stefan
(86) Internationale Anmeldenummer: PCT/EP2002/002159
(87) Internationale Veröffentlichungsnummer: WO 2002/070568

(56) Entgegenhaltungen:
- EP-A- 0 783 007
- US-A- 4 857 613
- US-A- 5 288 824
- US-B1- 6 184 170

## Beschreibung

Die vorliegende Erfindung betrifft ein Verfahren zur Dosierung von Katalysatoren zur Polymerisation von C₂-C₂₀-Olefinen, wobei zunächst der Katalysator in einem Behälter A eingeführt wird und anschließend die verwendeten Cokatalysatoren in einem Behälter B mit einem inerten Lösungsmittel vermischt werden, dadurch gekennzeichnet, daß der Inhalt des Behälters B in den Behälter A eingeführt und dort mit dem Katalysator vermischt wird und von dort aus in den eigentlichen Polymerisationsreaktor eingebracht wird.

Polymerisate von C₂-C₂₀-Olefinen können sowohl durch Flüssigphasenpolymerisation als auch durch Polymerisation im Monomeren (Bulkphasenpolymerisation), in einer Aufschlämmung oder durch Gasphasenpolymerisation hergestellt werden. Da sich das entstehende feste Polymerisat leicht vom gasförmigen Reaktionsgemisch abtrennen läßt, wird in zunehmendem Maß aus der Gasphase heraus polymerisiert. Die Polymerisation wird dabei mit Hilfe eines Ziegler-Natta-Ratalysatorsystems durchgeführt, welches üblicherweise aus einer titanhaltigen Feststoffkomponente, einer organischen Aluminiumverbindung und einer organischen Silanverbindung besteht (EP-B 45 977, EP-A 171 200, US-A 4 857 613, US-A 5 288 824). Daneben können Polymerisate von C₂-C₂₀-Olefinen aber auch durch Polymerisation mit Hilfe von Metallocenverbindungen oder von polymerisationsaktiven Metallkomplexen gewonnen werden. Dabei ist es wichtig, den verwendeten Katalysator in einer möglichst effizienten Weise in den Polymerisationsreaktor einzudosieren.

Die bekannten Techniken zur Dosierung von feinteiligen Katalysatoren zur Herstellung von Polymerisaten aus C₂-C₂₀-Olefinen sind vielfach schon seit Jahrzehnten etabliert (EP-A 025 137, DE-A 2 257 669, US-A 3,827,830, US-A 4,123,601, US-A 4,690,804). Gängige Techniken der Dosierung von Katalysatoren beruhen überwiegend auf einem Positionierorgan, das ein bestimmtes Volumenelement über eine geeignete Förderung in den Polymerisationsreaktor dosiert.

Mit der Entwicklung von immer leistungsfähigeren und selektiveren Katalysatoren zur Polymerisation von C₂-C₂₀-Olefinen wird es in zunehmendem Maße erforderlich, Katalysatoren sicher und störungsfrei in den Polymerisationsreaktor zu bringen. Darüber hinaus wird es aus wirtschaftlichen Gründen immer wichtiger, derartige Katalysatoren in der Weise in den Polymerisationsreaktor einzuführen, daß diese dort ihre maximale Produktivität ungestört entfalten können.

Der vorliegenden Erfindung lag daher die Aufgabe zugrunde, den geschilderten Nachteilen abzuhelfen und ein neues Verfahren zur Dosierung von Katalysatoren zur Polymerisation von C₂-C₂₀-Olefinen zu entwickeln, mit welchem diese möglichst sicher und homogen in den Polymerisationsreaktor eingebracht werden können, wobei es außerdem wichtig ist, daß das Verfahren die Produktivität der Katalysatoren möglichst positiv beeinflußt.

Demgemäß wurde ein neues, deutlich verbessertes Verfahren zur Dosierung von Katalysatoren zur Polymerisation von C₂-C₂₀-Olefinen gefunden, wobei zunächst der Katalysator in einem Behälter A eingeführt wird und anschließend die verwendeten Cokatalysatoren in einem Behälter B mit einem inerten Lösungsmittel vermischt werden, welches dadurch gekennzeichnet ist, daß der Inhalt des Behälters B in den Behälter A eingeführt und dort mit dem Katalysator vermischt wird und von dort aus in den eigentlichen Polymerisationsreaktor eingebracht wird.

Das erfindungsgemäße Verfahren eignet sich vor allem zur Dosierung von Katalysatoren bei der Polymerisation von C₂-C₂₀-Olefinen.

Als C₂-C₂₀-Olefine können im erfindungsgemäßen Verfahren insbesondere C₂-C₂₀-Alk-1-ene wie Ethylen, Propylen, But-1-en, Pent-1-en, Hex-1-en, Hept-1-en oder Oct-1-en verwendet werden, wobei Ethylen, Propylen oder But-1-en bevorzugt eingesetzt werden. weiterhin sollen unter der Bezeichnung C₂-C₂₀-Olefine insbesondere auch interne C₄-C₂₀-Olefine wie beispielsweise But-2-en oder Isopren, C₄-C₂₀-Diene wie beispielsweise 1,4-Butadien, 1,5-Hexadien, 1,9-Decadien, 5-Ethyliden-2-norbornen, 5-Methyliden-2-norbornen, weiterhin cyclische Olefine wie beispielsweise Norbornen oder α-Pinen oder aber Triene wie beispielsweise 1,6-Diphenyl-1,3,5-hexatrien, 1,6-Di-tert.-butyl-1,3,5-hexatrien, 1,5,9-Cyclododecatrien,trans,trans-Farnesol, sowie mehrfach ungesättigte Fettsäuren oder Fettsäureester verstanden werden. Das Verfahren kommt zur Herstellung von Homopolymerisaten der C₂-C₂₀-Olefine oder von Copolymerisaten der C₂-C₂₀-Olefine, bevorzugt mit bis zu 30 Gew.-% einpolymerisierter anderer Olefine mit bis zu 20 C-Atomen, in Betracht. Unter Copolymerisaten sollen hierbei sowohl statistische Copolymerisate als auch die sogenannten Block- oder Impactcopolymerisate verstanden werden.

In der Regel wird das erfindungsgemäße Verfahren zur Dosierung von Katalysatoren bei der Polymerisation in wenigstens einer Reaktionszone, häufig auch in zwei oder mehr Reaktionszonen durchgeführt, d.h. die Polymerisationsbedingungen unterscheiden sich in den Reaktionszonen soweit, daß Polymerisate mit unterschiedlichen Eigenschaften erzeugt werden. Für die Homopolymerisate oder statistischen Copolymerisate kann dies beispielsweise die Molmasse sein, d.h. zur Verbreiterung der Molmassenverteilung werden in den Reaktionszonen Polymerisate mit unterschiedlichen Molmassen hergestellt. Bevorzugt werden in den Reaktionszonen unterschiedliche Monomere bzw. Monomerzusammensetzungen polymerisiert. Dies führt dann üblicherweise zu den Block- oder Impactcopolymerisaten.

Besonders geeignet ist das erfindungsgemäße Verfahren zur Herstellung von Homopolymerisaten des Propylens oder von Copolymerisaten des Propylens mit bis zu 30 Gew.-% einpolymerisierter anderer Olefine mit bis zu 10 C-Atomen. Die Copolymerisate des Propylens sind hierbei statistische Copolymerisate oder Block- oder Impactcopolymerisate. Sofern die Copolymerisate des Propylens statistisch aufgebaut sind, enthalten sie im allgemeinen bis zu 15 Gew.-%, bevorzugt bis zu 6 Gew.-%, andere Olefine mit bis zu 10 C-Atomen, insbesondere Ethylen, But-1-en oder ein Gemisch aus Ethylen und But-1-en.

Die Block- oder Impactcopolymerisate des Propylens sind Polymerisate, bei denen man in der ersten Stufe ein Propylenhomopolymerisat oder ein statistisches Copolymerisat des Propylens mit bis zu 15 Gew.-%, bevorzugt bis zu 6 Gew.-%, anderer Olefine mit bis zu 10 C-Atomen herstellt und dann in der zweiten Stufe ein Propylen-Ethylen-Copolymerisat mit Ethylengehalten von 15 bis 99 Gew.-%, wobei das Propylen-Ethylen-Copolymerisat zusätzlich noch weitere C₄-C₁₀-Olefine enthalten kann, hinzupolymerisiert. In der Regel wird soviel des Propylen-Ethylen-Copolymerisats hinzupolymerisiert, daß das in der zweiten Stufe erzeugte Copolymerisat im Endprodukt einen Gehalt von 3 bis 90 Gew.-% aufweist.

Als einzusetzende Katalysatoren, welche nach dem erfindungsgemäßen Verfahren in den Polymerisationsreaktor dosiert werden, werden Zieglerkatalysatoren verwendet. Die Polymerisation wird mittels eines Ziegler-Natta-Katalysatorsystems durchgeführt. Dabei werden solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen. zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Balogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 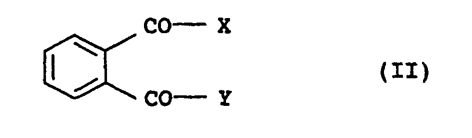 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest bedeuten. Beispiele für vorzugsweise eingesetzte Phthalsäureester sind Diethylphthalat, Di-n-butylphthalat, Di-isobutylphthalat, Di-n-pentylphthalat, Di-n-hexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g, und eine spezifische Oberfläche von 10 bis 1000 m²/g, bevorzugt von 100 bis 500 m²/g, auf, wobei hier die durch Quecksilber-Porosimetrie nach DIN 66133 und durch Stickstoff-Adsorption nach DIN 66131 bestimmten Werte zu verstehen sind.

Es ist auch möglich, ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, des Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der wassergehalt des anorganischen Oxids reduziert oder ganz beseitigt werden, wobei in der Regel bei einer chemischen Behandlung übliche Trocknungsmittel wie SiCl₄, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111.066, der US-A 4 857 613 und der US-A 5 288 824 beschrieben. Bevorzugt wird das aus der DE-A 195 29 240 bekannte verfahren angewandt.

Geeignete Aluminiumverbindungen b) als Cokatalysatoren sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.-butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) von 1:1 bis 250:1, insbesondere von 10:1 bis 80:1, beträgt.

Die titanhaltige Feststoffkomponente a) sowie die Cokatalysatoren, die Aluminiumverbindung b) und die in der Regel verwendete Elektronendonorverbindung c) bilden zusammen das Ziegler-Natta-Katalysatorsystem.

Das erfindungsgemäße Verfahren kann zur Dosierung von solchen Katalysatoren verwendet werden, die bei der Polymerisation von C₂-C₂₀-Olefinen eingesetzt werden. Die Polymerisation kann dabei in wenigstens einer, häufig auch in zwei oder noch mehr hintereinandergeschälteten Reaktionszonen (Reaktorkaskade) in der Gasphase, in der Flüssigphase, in der Slurryphase oder aber in der Bulkphase durchgeführt werden. Die Reaktionsbedingungen können bei der eigentlichen Polymerisation auch so eingestellt werden, daß die jeweiligen Monomere in zwei unterschiedlichen Phasen vorliegen, beispielsweise teils in flüssigem und teils in gasförmigen Zustand (condensed mode).

Es können die üblichen, für die Polymerisation von C₂-C₂₀-Olefinen verwendeten Reaktoren eingesetzt werden. Geeignete Reaktoren sind u.a. kontinuierlich betriebene horizontale oder vertikale Rührkessel, Umlaufreaktoren, Schleifenreaktoren, Stufenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im erfindungsgemäßen Verfahren im allgemeinen aus dem Polymerisat aus C₂-C₂₀-Olefinen, das im jeweiligen Reaktor polymerisiert wird.

In einer besonders bevorzugten Ausführungsform des erfindungsgemäßen Verfahrens wird die Polymerisation in einem Reaktor oder in einer Kaskade aus hintereinander geschalteten Reaktoren durchgeführt, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesseiförmigen, mit einem Rührer versehenen Reaktoren mit einem Rauminhalt von 0,1 bis 100 m³, beispielsweise 12,5, 25, 50 oder 75 m³.

Nach dem erfindungsgemäßen Verfahren zur Dosierung von Katalysatoren zur Polymerisation von C₂-C₂₀-Olefinen wird zunächst der Katalysator, d.h. die titanhaltige Feststoffkomponente a) bei Ziegler-Natta-Katalysatoren oder die Metallocenverbindung bei Metallocenkatalysatoren in den Behälter A eingeführt. Hierfür eignen sich in der Technik übliche Aufbewahrungsbehälter, u.a. Rührkessel oder aber rührerlose Kessel.

Im Anschluß daran werden nach dem erfindungsgemäßen verfahren die verwendeten Cokatalysatoren, d.h. die organischen Aluminiumverbindungen b) und die Elektronendonorverbindungen c) bei ziegler-Natta-Katalysatorsystemen oder die metallocenionenbildenden Verbindungen bei Metallocenkatalysatorsystemen in einem Behälter B mit einem inerten Lösungsmittel vermischt. Als Behälter B werden ebenfalls in der Technik übliche Aufbewahrungsbehälter verwendet, beispielsweise Rührkessel oder aber rührerlose Kessel. Das vermischen der eingesetzten Cokatalysatoren mit dem inerten Lösungsmittel erfolgt üblicherweise bei Temperaturen von 10 bis 50°C, insbesondere bei Temperaturen von 15 bis 40°C für einen Zeitraum von 2 bis 120 min, insbesondere von 3 bis 100 min. Geeignete inerte Lösungsmittel sind u.a. Benzinschnitte wie Exxol oder Varsol, beides Handelsprodukte der Firma Exxon, oder aber andere inerte Kohlenwasserstoffe. Besonders geeignete inerte Kohlenwasserstoffe sind u.a. Pentan, Hexan, Heptan, Nonan oder Decan sowie Benzinschnitte aus Kohlenwasserstoffen im Siedebereich von 80 bis 120°C oder von 140 bis 170°C.

Nach dem erfindungsgemäßen Verfahren zur Dosierung von Katalysatoren ist es ferner wesentlich, daß der Inhalt des Behälters B mit den Cokatalysatoren in den Behälter A mit dem Katalysator eingeführt und dort mit dem Katalysator vermischt wird. Dies erfolgt üblicherweise bei Temperaturen von 10 bis 50°C, insbesondere bei 15 bis 35°C für einen Zeitraum von 2 bis 120 min, insbesondere von 3 bis 100 min. Von dort aus wird der Inhalt des Behälters A, d.h. der Katalysator, die Cokatalysatoren und das. inerte Lösungsmittel dann in den eigentlichen Polymerisationsreaktor gebracht. Dies erfolgt üblicherweise durch Pumpen oder durch Anlegen eines Druckgefälles. Im Polymerisationsreaktor erfolgt dann die eigentliche Polymerisation der C₂-C₂₀-Olefine.

Die eigentliche Polymerisation kann unter üblichen Reaktionsbedingungen bei Temperaturen von 40 bis 150°C und Drücken von 1 bis 100 bar vorgenommen werden. Bevorzugt sind Temperaturen von 40 bis 120°C, insbesondere von 60 bis 100°C und Drücke von 10 bis 50 bar, insbesondere von 20 bis 40 bar. Die Molmasse der gebildeten Polymerisate der C₂-C₂₀-Olefine kann durch die Zugabe von in der Polymerisationstechnik üblichen Reglern, beispielsweise von Wasserstoff, kontrolliert und eingestellt werden. Neben Reglern können auch sogenannte Regulatoren, d.h. Verbindungen, die die Katalysatoraktivität beeinflussen, oder auch Antistatika eingesetzt werden. Letztere verhindern die Belagbildung an der Reaktorwand durch elektrostatische Aufladung. Die Polymerisate der C₂-C₂₀-Olefine weisen in der Regel eine Schmelze-Fließrate (MFR) von 0,05 bis 3000 g/10 min., insbesondere von 0,1 bis 100 g/10 min, bei 230°C und unter einem Gewicht von 2,16 kg, auf. Die Schmelze-Fließrate entspricht dabei der Menge an Polymerisat, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Polymerisate, deren Schmelze-Fließrate 0,2 bis 50 g/10 min, bei 230°C und unter einem Gewicht von 2,16 kg, beträgt.

Die mittleren Verweilzeiten liegen bei der eigentlichen Polymerisation der C₂-C₂₀-Olefine im Bereich von 0,1 bis 10 Stunden, bevorzugt im Bereich von 0,2 bis 5 Stunden und insbesondere im Bereich von 0,3 bis 4 Stunden.

Mit Hilfe des erfindungsgemäßen Verfahrens zur Dosierung von Katalysatoren ist es möglich, diese sicher und homogen in den Polymerisationsreaktor zu befördern, wo diese dann eine gesteigerte Produktivität entfalten können. Das erfindungsgemäße Verfahren ist technisch leicht und kostengünstig durchführbar.

### Beispiele

Bei den Versuchen der Beispiele 1, 2 und den Vergleichsbeispielen A, B und C wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente a) enthielt
3,5 Gew.-% Ti
7,4 Gew.-% Mg
28,2 Gew.-% Cl.

Neben der titanhaltigen Feststoffkomponente a) wurden als Cokatalysatoren Triethylaluminium und organische Silanverbindungen analog der Lehre der US-A 4 857 613 und der US-A 5 288 824 verwendet.

### Beispiel 1

In einem Edelstahlbehälter A mit einem Volumen von 700 Liter wurden 2000 g der titanhaltigen Feststoffkomponente a) (PTK4 Katalysator) eingegeben.

In einen zweiten Behälter B, der mit Stickstoff inertisiert war, wurden 500 Liter eines Benzinschnitts, Varsol 140/170 (Handelsname der Firma Exxon Chemicals) mit einer Temperatur von 30°C vorgelegt und anschließend getrennt voneinander 15 mol Triethylaluminium und 0,15 mol Isobutylisopropyldimethoxysilan zugegeben. Diese Mischung wurde 5 Minuten gerührt und anschließend in den Behälter A transferiert. Der Inhalt des Behälters A bestand nun aus: 2000 g titanhaltige Feststoffkomponente, 500 Liter Varsol 140/170, 15 mol Triethylaluminium und 0,15 mol Isobutylisopropyldimethoxysilan (=Donor). Dieser Inhalt wurde zehn Minuten bei 40°C gerührt.

In einem Großreaktor mit einem Volumen von 40.000 1 wurden 20.000 1 Varsol, in dem 50 mol Triethylaluminium und 1000 kg Propylen gelöst sind, vorgelegt. Diese Lösung wurde zehn Minuten gerührt.

Der gesamte Ansatz des Behälters A wurde in den Polymerisationsreaktor C transferiert. Gleichzeitig wurde solange Propylen zugefahren, bis sich ein Druck von 10 bar einstellte, die Temperatur wurde dann auf 70°C erhöht. Es wurde Wasserstoff so zugegeben, daß sich eine Konzentration von 0,8 Vol.% in der Gasphase einstellte. Die Polymerisation startete. Der Druck wurde konstant bei 10 bar durch Nachdosieren von Propylen gehalten. Die Temperatur wurde durch Kühlung konstant gehalten. Es wurden insgesamt 10.000 kg Propylen innerhalb von 2 Stunden zugefahren.

Anschließend wurde der Reaktorinhalt entspannt, Varsol und das erhaltene Polypropylen durch Filtrieren und Zentrifugieren getrennt. Das Polypropylen wurde getrocknet.

Am erhaltenen Polypropylen wurde ein MFR 230/5 von 8 g/10 min bestimmt und ein xylolkaltlöslicher Anteil von 1,6 Gew.-%. Es berechnet sich eine Katalysatorausbeute von 5,9 kg PP/g Kat. Es wurde ein Restaschegehalt von 1 % bestimmt.

### Vergleichsbeispiel A

Es wurde verfahren wie in Beispiel 1, außer daß im Behälter B ausschließlich Varsol vorgelegt wurde. Triethylaluminium und Donor wurden in der in Beispiel 1 angegebenen Menge direkt in den Reaktor C gefahren. Es konnte im Reaktor C keine Polymerisation festgestellt werden.

### Vergleichsbeispiel B

Es wurde verfahren wie in Beispiel 1, außer daß im Behälter B Varsol und die in Beispiel 1 genannte Menge Donor vorgelegt wurde.

Triethylaluminium wurde in der in Beispiel 1 angegebenen Menge direkt in den Reaktor C gefahren. Es konnte im Reaktor C keine Polymerisation festgestellt werden.

### Vergleichsbeispiel C

Es wurde verfahren wie in Beispiel 1, außer daß im Behälter B Varsol und die in Beispiel 1 genannte Menge Triethylaluminium vorgelegt wurde. Am erhaltenen Polypropylen wurde ein MFR 230/5 von 11 g/10 min bestimmt und ein xylolkaltlöslicher Anteil von 5,6 Gew.-%. Es berechnete sich eine Katalysatorausbeute von 2,5 kg PP/g Kat.

### Beispiel 2

In einen Edelstahlbehälter mit einem Volumen von 1000 Liter, wurden 1700 g der titanhaltigen Feststoffkomponente a) (PTK4 Katalysator) eingegeben. In einen zweiten Behälter B, der mit Stickstoff inertisiert wurde, wurden 500 Liter Varsol 140/170 mit einer Temperatur von 30°C vorgelegt und anschließend getrennt voneinander 1,5 mol Triethylaluminium und 0,15 mol Isobutylisopropyl-dimethoxysilan zugegeben. Diese Mischung wurde 5 Minuten gerührt und anschließend in den Behälter A transferiert. Der Inhalt des Behälters A bestand nun aus: 1700 g titanhaltige Feststoffkomponente a), 500 1 Varsol 140/170. 1,5 mol Triethylaluminium und 0,15 mol Isobutyliso-proypyldimethoxysilan (=Donor). Dieser Inhalt wurde zehn Minuten bei 30°C gerührt.

In einem Großreaktor mit einem Volumen von 40.000 1 wurden 20.000 1 Varsol, in dem 60 mol Triethylaluminium und 1000 kg Propylen gelöst sind, vorgelegt. Diese Lösung wurde zehn Minuten gerührt.

Der gesamte Ansatz des Behälters A wurde in den Polymerisationsreaktor C transferiert. Gleichzeitig wurde solange Propylen zugefahren, bis sich ein Druck von 10 bar einstellte, die Temperatur wurde auf 70°C erhöht. Es wurde Wasserstoff so zugegeben, daß sich eine Konzentration von 0,8 Vol.-% einstellte. Die Polymerisation startete. Der Druck wurde konstant bei 10 bar durch Nachdosieren von Propylen gehalten. Die Temperatur wurde durch Kühlung konstant gehalten. Es wurden insgesamt 10.000 kg Propylen innerhalb von 2 Stunden zugefahren. Nach den zwei Stunden wurde der Reaktor auf 1 bar entspannt und langsam 500 kg Ethylen in einer Zeit von 12 Minuten zugefahren. Die Zusammensetzung der Gasphase über der Flüssigkeitsphase im Reaktor wurde durch Gaschromatographie kontrolliert.

Anschließend wurde der Reaktorinhalt entspannt und Varsol und sowie das erhaltene Propylen-Ethylen-Copolymerisat durch Filtrieren und Zentrifugieren getrennt. Das erhaltene Propylen-Ethylen-Copolymerisat wurde getrocknet.

Am Propylen-Ethylen-Copolymerisat wird ein MFR 230/5 von 12 g/10 min bestimmt und eine xylolkaltlöslicher Anteil von 10,4 Gew.-%. Es berechnet sich eine Katalysatorausbeute von 7,9 kg PP/g Kat.

Bestimmung der Schmelzflußrate (MFR): nach IS0 1133, bei 230°C und 2,16 kg

Bestimmung des xylolkaltlöslichen Anteils (in Gew.-%): Eine Polymerprobe wurde in siedendem Xylol vollständig gelöst und danach wurde die Mischung auf 20°C abgekühlt. Unlösliches wurde abfiltriert, bis zu Gewichtskonstanz getrocknet und gewogen. Das prozentuale Verhältnis der gewogenen Polymermenge zur eingesetzten Polymermenge wurde berechnet.

Bestimmung der Katalysatorausbeute (Produktivität - kg PP/g Kat.) über das Verhältnis der hergestellten Menge an Polypropylen (PP) in kg, im Verhältnis zur Menge des eingesetzten Katalysators in g.

## Patentansprüche

1. Verfahren zur Dosierung von Ziegler-Natta-Katalysatorsystemen in einen Reaktor zur Polymerisation von C₂-C₂₀-Olefinen, wobei als Katalysator eine titanhaltige Feststoffkomponente a) und als Cokatalysatoren organische Aluminiumverbindungen b) und Elektronendonorverbindungen c) verwendet werden, bei dem
- die im wesentlichen lösungsmittelfreie titanhaltige Feststoffkomponente a) in einen im wesentlichen lösungsmittelfreien Behälter A eingeführt wird,
- die Cokatalysatoren in einem Behälter B mit einem inerten Lösungsmittel vermischt werden,
- der Inhalt des Behälters B in den Behälter A eingeführt und dort mit dem Katalysator vermischt wird und von dort aus in den eigentlichen Polymerisationsreaktor eingebracht wird.

2. Verfahren nach Anspruch 1, wobei die verwendeten Cokatalysatoren im Behälter B bei Temperaturen von 10 bis 50°C vermischt werden.

3. Verfahren nach den Ansprüchen 1 oder 2, wobei der Inhalt des Behälters B in den Behälter A bei Temperaturen von 10 bis 50°C eingeführt und dort mit dem Katalysator vermischt wird.

4. Verfahren nach den Ansprüchen 1 bis 3, wobei als inertes Lösungsmittel im Behälter B ein inerter Kohlenwasserstoff verwendet wird.

5. Verfahren nach den Ansprüchen 1 bis 4, wobei es zur Dosierung von Ziegter-Natta-Katalysatorsystemen bei der Polymerisation von Ethylen, Propylen oder But-1-en eingesetzt wird.

## Claims

1. A method of adding Ziegler-Natta catalyst systems to a reactor for the polymerization of C₂-C₂₀-olefins, wherein the catalyst used is a titanium-containing solid component a) and the cocatalysts used are organic aluminum compounds b) and electron donor compounds c), in which
- the essentially solvent-free titanium-containing solid component a) is introduced into an essentially solvent-free container A,
- the cocatalysts are mixed with an inert solvent in a container B,
- the contents of the container B are introduced into the container A and mixed with the catalyst there and are introduced from there into the actual polymerization reactor.

2. A method as claimed in claim 1, wherein the cocatalysts used are mixed at from 10 to 50°C in the container B.

3. A method as claimed in claim 1 or 2, wherein the contents of the container B are introduced into the container A at from 10 to 50°C and are mixed with the catalyst there.

4. A method as claimed in any of claims 1 to 3, wherein the inert solvent used in container B is an inert hydrocarbon

5. A method as claimed in any of claims 1 to 4 used for the addition of Ziegler-Natta catalyst systems in the polymerization of ethylene, propylene or 1-butene.

## Revendications

1. Procédé de dosage de systèmes de catalyseurs Ziegler-Natta dans un réacteur pour la polymérisation d'oléfines en C₂ à C₂₀, dans lequel on utilise, en tant que catalyseur, un composant solide contenant du titane a) et, en tant que co-catalyseurs, des composés organiques de l'aluminium b) et des composés donneurs d'électrons c), dans lequel
- on introduit le composant solide contenant du titane a) essentiellement exempt de solvant dans un récipient A essentiellement exempt de solvant,
- on mélange les co-catalyseurs b) dans un récipient B contenant un solvant inerte,
- on introduit le contenu du récipient B dans le récipient A et on l'y mélange avec le catalyseur et on les introduit à partir de là dans le réacteur de polymérisation proprement dit.

2. Procédé selon la revendication 1, dans lequel on mélange les co-catalyseurs mis en oeuvre dans le récipient B à des températures de 10°C à 50°C.

3. Procédé selon les revendications 1 ou 2, dans lequel on introduit le contenu du récipient B dans le récipient A à des températures de 10°C à 50°C et on l'y mélange avec le catalyseur.

4. Procédé selon les revendications 1 à 3, dans lequel on utilise un hydrocarbure inerte en tant que solvant inerte dans le récipient B.

5. Procédé selon les revendications 1 à 4, que l'on met en oeuvre pour le dosage de systèmes de catalyseurs Ziegler-Natta pour la polymérisation d'éthylène, de propylène ou de but-1-ène.
